**Europäisches Patentamt**

**European Patent Office**

**Office européen des brevets**

(19)

(11) Veröffentlichungsnummer: **0 445 565 A2**

# EUROPÄISCHE PATENTANMELDUNG

(12)

(21) Anmeldenummer: **91102301.8**

(22) Anmeldetag: **19.02.91**

(51) Int. Cl.5: **B32B 15/04, B65D 65/40**

(30) Priorität: **07.03.90 DE 4007095**

(43) Veröffentlichungstag der Anmeldung:
**11.09.91 Patentblatt 91/37**

(84) Benannte Vertragsstaaten:
**AT BE CH DE DK ES FR GB IT LI LU NL SE**

(71) Anmelder: **PKL Verpackungssysteme GmbH**
**Kennedydamm 15-17**
**W-4000 Düsseldorf 30(DE)**

(72) Erfinder: **Gensch, Ingo, Dipl.-ing.**
**Fuchsgracht 22**
**W-5172 Linnich(DE)**
Erfinder: **Hahn, Alfred**
**Heinrichstrasse 3**
**W-4353 Oer-Erkenschwick(DE)**

(74) Vertreter: **Cohausz & Florack Patentanwälte**
**Postfach 14 01 61 Schumannstrasse 97**
**W-4000 Düsseldorf 1(DE)**

(54) **Verpackungsmaterial für feste, fetthaltige Füllgüter.**

(57) Die Erfindung bezieht sich auf ein Verpackungsmaterial für feste, fetthaltige Füllgüter, wie Butter. Das Verpackungsmaterial besteht aus einer Aluminiumfolie 1, die auf der einen Seite, insbesondere der Füllgutseite, einen fettbeständigen, insbesondere fettabweisenden Schutzlack 2 und auf der anderen Seite eine mittels eines Ethylen-Copolymerisates 4 aufkaschierte Pergaminschicht 3 trägt.

EP 0 445 565 A2

Die Erfindung bezieht sich auf Verpackungsmaterial für feste, fetthaltige Füllgüter, insbesondere Butter und andere Lebensmittel, in Form einer füllgutseitig mit einem fettbeständigen Schutzlack beschichteten Aluminiumfolie, auf deren füllgutabgewandter Seite Pergamin aufkaschiert ist.

Die klassischen Verpackungsmaterialien für Butter sind zum einen satiniertes Papier mit einer PVDC-Beschichtung an der Butterseite und zum anderen eine Aluminiumfolie, die auf der Butterseite wachskaschiert ist und Echtpergament trägt. Diese klassischen Verpackungsmaterialien erfüllen nicht alle an sie zu stellenden Forderungen.

Die Verpackungsmaterialien sollen ein gutes Aussehen haben und bedruckt werden können. Sie sollen fett- und lichtdicht sein. Diese Forderungen werden von dem die Aluminiumfolie enthaltenden Verpackungsmaterial erfüllt. Bei dem satiniertes Papier enthaltenden Verpackungsmaterial wird die Lichtdichtigkeit jedoch nicht gewährleistet. Ferner soll das verpackte Füllgut bei langer Lagerzeit durch das Verpackungsmaterial selbst nicht beeinträchtigt werden. Diese Forderung ist bei dem Verpackungsmaterial mit Aluminiumfolie durch die Wachskaschierung und das Echtpergament zwar erfüllt, doch ist der dafür erforderliche Aufwand hoch. Hinzu kommt der Nachteil, daß beim Entfernen des Verpackungsmaterials von dem verpackten Gut es wegen der guten Haftung des verpackten Gutes an dem Echtpergament Mühe bereitet, das verpackte Gut vom Verpackungsmaterial zu trennen. Bei dem satiniertes Papier enthaltenden Verpackungsmaterial ist der Einsatz des chlorhaltigen PVDC für Nahrungsmittel zur Zeit umstritten, vornehmlich bei der Entsorgung in Müllverbrennungsanlagen.

Schließlich wird von dem Verpackungsmaterial eine hohe mechanische Festigkeit verbunden mit einer guten Faltfähigkeit verlangt. Aluminiumfolie enthaltendes Verpackungsmaterial läßt sich zwar gut falten, doch ist seine mechanische Festigkeit nicht allzu hoch. Satiniertes Papier enthaltendes Verpackungsmaterial hat keine gute mechanische Festigkeit und ist knickanfällig.

Die meisten der vorstehenden Forderungen werden mit einem bekannten Verpackungsmaterial für Butter der eingangs genannten Art gelöst (Stüssi, D: Neuere Gesichtspunkte bei der Anwendung von Aluminiumfolien für die Butterverpackung; 15. Internationaler Milchwirtschafts-Kongreß 1959, Bd. II, S. 1126-1132). Nachteilig bei diesem Verpackungsmaterial ist jedoch, daß das auf der Außenseite der Aluminiumfolie aufkaschierte Pergamin die Alu-Folie nicht ausreichend durchscheinen läßt und wenig fettdicht ist.

Der Erfindung liegt die Aufgabe zugrunde, ein Verpackungsmaterial der eingangs genannten Art zu schaffen, das die vorgenannten Forderungen und zwar vor allem die Forderung nach einer höheren Fettdichtigkeit und höheren Transparenz der Pergamin-Kaschierung erfüllt.

Diese Aufgabe wird erfindungsgemäß mit einem Verpackungsmaterial der eingangs genannten Art dadurch gelöst, daß als Kaschiermittel ein Ethylen-Copolymerisat dient. Dabei ist das Ethylen-Copolymerisat vorzugsweise ein Ethylenacrylsäure-Copolymer mit 3 bis 9 % Comonomergehalt. Der Schutzlack sollte nicht nur fettbeständig, sondern auch fettabweisend sein.

Das erfindungsgemäße Verpackungsmaterial hat als Verbundmaterial eine hohe mechanische Festigkeit und ist nicht knickanfällig. Es läßt sich ausgezeichnet falten (ausgeprägter dead-fold-Effekt), so daß es beim Verpacken des Füllgutes sich ohne Lufteinschlüsse an das Füllgut anlegen läßt. Dies ist für die Haltbarkeit des Füllgutes wichtig. Aufgrund des sonst nur aus Gründen der hervorragenden Haftfestigkeit und der Lebensmitteltauglichkeit für Verbundmaterialen empfohlenen Ethylen-Copolymerisats (Hans-Jürgen Sechting, Kunststoff-Taschenbuch, 23. Ausgabe, 1986, S. 206 und 233, Karl-Hansa-Verlag München, Wien) als Kaschiermittel zwischen der Aluminiumfolie und dem Pergamin wird dem Verpackungsmaterial nicht nur die geforderte Fett- und Lichtdichtigkeit, sondern auch ein gutes Aussehen verliehen. Das aufkaschierte Pergamin läßt nämlich die Aluminiumfolie durchscheinen und ist gut bedruckbar. Wegen des auf die Aluminiumfolie aufgetragenen Schutzlackes kann die Aluminiumfolie das Füllgut nicht beeinträchtigen. Wegen der Glätte des Schutzlackes läßt sich das Füllgut leicht vom Verpackungsmaterial ablösen. Dies kann noch gefördert werden, wenn der Schutzlack fettabweisend ist. Schließlich zeichnet sich das erfindungsgemäße Verpackungsmaterial durch gute Schneid- und Stanzfähigkeit aus.

Im folgenden wird die Erfindung anhand einer Zeichnung näher erläutert, die ein Ausführungsbeispiel des Verpackungsmaterials im ausschnittweisen Querschnitt zeigt.

Eine 6,5 bis 8 $\mu$ dicke Aluminiumfolie 1 trägt auf der Füllgutseite eine Beschichtung 2 aus einem Schutzlack mit einem Metergewicht von 1 bis 3 g, der fett- und wasserbeständig und bei Verpackung von Molkereiprodukten auch beständig gegen 1 %-ige Milchsäure ist. Auf der Außenseite trägt die Aluminiumfolie 1 eine Pergaminfolie 3 mit einem Metergewicht von 35 bis 45 g, die mittels eines Ethylenacrylsäure-Copolymers 4 mit 3 bis 9 % Comonomergehalt aufkaschiert ist.

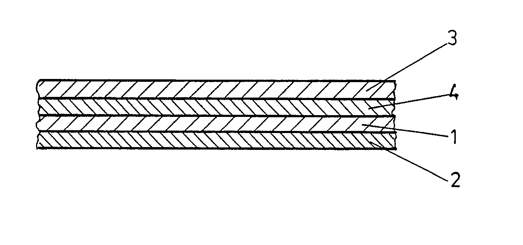

**Patentansprüche**

1. Verpackungsmaterial für feste, fetthaltige Füllgüter, insbesondere Butter und andere Lebensmittel, in Form einer füllgutseitig mit einem fettbeständigen Schutzlack (2) beschichteten Aluminiumfolie (1), auf deren füllgutabgewandter Seite Pergamin (3) aufkaschiert ist, **dadurch gekennzeichnet,** daß als Kaschiermittel ein Ethylen-Copolymerisat (4) dient.

2. Verpackungsmaterial nach Anspruch 1, **dadurch gekennzeichnet,** daß das Ethylen-Copolymerisat ein Ethylenacrylsäure-Copolymer mit 3 bis 9 % Comonomergehalt ist.

3. Verpackungsmaterial nach Anspruch 1 oder 2, **dadurch gekennzeichnet,** daß der Schutzlack (2) fettabweisend ist.

4